# EUROPÄISCHE PATENTANMELDUNG

(11) **EP 1 901 407 A1**
(43) Veröffentlichungstag der Anmeldung: **19.03.2008**
(21) Anmeldenummer: 07115977.6
(22) Anmeldetag: 10.09.2007
(51) Int. Cl.: H02B 1/052

(54) **Hutschienenträger und Hutschiene mit zwei Hutschienenträgern**

(30) Priorität: 13.09.2006 DE 102006042947
(71) Anmelder: SIEMENS AKTIENGESELLSCHAFT, 80333 München (DE)
(72) Erfinder: Berger, Martin, 92421, Schwandorf (DE); Grandjean, Birgitta, 91083, Baiersdorf (DE)

(57) **Zusammenfassung**

Um eine Hutschiene an einem Montagegitter zu befestigen, wird diese mit zwei Hutschienenträgern (10) ausgestattet, die jeweils einen geeigneten Einhängeabschnitt (16) aufweisen, um an einer Quergitterstrebe (40) eines Montagegitters (38) eingehängt zu werden. Beispielsweise weist der Einhängeabschnitt (16) eine Einhängelasche (24) auf. Besonders guten Halt erhält die Hutschiene durch einen Einrastvorsprung (28), der im montierten Zustand eine Längsgitterstrebe (42) des Montagegitters (38) hintergreift. Die Montage geht einfach durch Wegbiegen des Einhängeabschnitts (16) und gleichzeitiges Aufsetzen auf die Quergitterstrebe (40) vonstatten. Das Wegbiegen wird dadurch ermöglicht, dass die Hutschienenträger als Blechteil mit Biegestellen (20 und 30) ausgebildet sind.

## Beschreibung

Die Erfindung betrifft einen Hutschienenträger, mithilfe dessen eine Hutschiene an einem Montagegitter befestigbar ist. Sie betrifft auch eine Hutschiene mit zwei derartigen Hutschienenträgern.

In elektrischen Verteilern wird häufig eine Vielzahl von elektrischen Geräten, zum Beispiel von Reiheneinbaugeräten, eingebaut. Üblicherweise erfolgt die Montage an einer Montageplatte oder einer Hutschiene. Diese Montageplatte kann gitterförmig sein (Montagegitter). Manche elektrischen Geräte werden üblicherweise direkt an der Montageplatte befestigt. Andere elektrische Geräte, zum Beispiel Reiheneinbaugeräte, sind dazu ausgelegt, auf Hutschienen aufgeschnappt zu werden. In den meisten Fällen werden in den Verteilern entweder eine Montageplatte oder eine Hutschiene eingebaut. Es kommt aber auch vor, dass beide Fälle in Verteilern umgesetzt werden müssen. Hierzu werden Hutschienenträger eingesetzt, die an der Hutschiene einerseits und an der Montageplatte bzw. dem Montagegitter andererseits befestigt werden. Zum Befestigen an einem Montagegitter werden gegenwärtig Schrauben eingesetzt. Um Schrauben aufzunehmen, werden an dem Montagegitter Käfigmuttern befestigt. Diese Art der Befestigung einer Hutschiene an einem Montagegitter ist sehr umständlich und zeitaufwändig.

Es ist Aufgabe der Erfindung, einen montagefreundlichen und zeitsparenden Weg aufzuzeigen, wie eine Hutschiene an einem Montagegitter befestigt werden kann.

Die Aufgabe wird durch eine Hutschiene mit den Merkmalen gemäß Patentanspruch 1 und einen Hutschienenträger mit den Merkmalen gemäß Patentanspruch 5 gelöst.

Die erfindungsgemäße Hutschiene umfasst zwei Hutschienenträger, die jeweils einen Einhängeabschnitt aufweisen. Dieser Einhängeabschnitt ist dazu ausgelegt, an einer Quergitterstrebe eines Montagegitters eingehängt zu werden. Die Erfindung geht somit davon ab, die Hutschienenträger anzuschrauben. Vielmehr werden diese auf bestimmte Weise ausgeformt, und zwar derart, dass ein Einhängen ermöglicht ist.

Beispielsweise weist jeder Einhängeabschnitt eine Einhängelasche auf. Es kann sich eine einzige Einhängelasche über die gesamte Breite des Einhängeabschnitts erstrecken. Alternativ sind mehrere Einhängelaschen pro Einhängeabschnitt vorgesehen.

Das Abgehen vom Konzept des Verschraubens bedeutet nicht, dass nicht auch ausreichender Halt an dem Montagegitter zu finden wäre. Um den Halt zu unterstützen, kann an jedem Einhängeabschnitt ein Einrastvorsprung ausgebildet sein, um bei auf einer Quergitterstrebe des Montagegitters eingehängtem Einhängeabschnitt eine Längsgitterstrebe des Montagegitters zu hintergreifen. Durch den Einrastvorsprung wird gewährleistet, dass die Hutschiene mit den Hutschienenträgern sich bei einem versehentlichen Anheben nicht von dem Montagegitter lösen kann.

Um ausreichend Verdrahtungsraum zu gewährleisten, weist jeder Hutschienenträger bevorzugt einen Abstandshalteabschnitt auf, der den Abstand der Hutschiene von dem Montagegitter gewährleistet. Dieser geht mit einem ersten Ende federnd in einen an der Hutschiene befestigten Befestigungsabschnitt über. An seinem zweiten Ende ist der Einhängeabschnitt ausgebildet. Durch den federnden Übergang, der beispielsweise als Biegestelle eines Blechs ausgebildet sein kann, ist der Abstandshalteabschnitt mit dem Einhängeabschnitt beweglich. Dies ist insbesondere dann von Vorteil, wenn der oben erwähnte Einrastvorsprung vorgesehen ist, weil dann der Hutschienenträger flexibel bewegt werden kann und der Einrastvorsprung an einer Längsgitterstrebe vorbei geführt werden kann. Anschließend darf der Hutschienenträger der federnden Bewegung wieder nachgeben, und der Einhängeabschnitt wird gegen die Längsgitterstrebe gedrückt, wobei der Einrastvorsprung die Längsgitterstrebe des Montagegitters hintergreift.

Ein erfindungsgemäßer Hutschienenträger weist einen Befestigungsabschnitt zum Befestigen des Hutschienenträgers an einer Hutschiene auf, einen Abstandshalteabschnitt, sowie einen Einhängeabschnitt, der zum Einhängen an einer Quergitterstrebe eines Montagegitters ausgelegt ist.

Der erfindungsgemäße Hutschienenträger ist bevorzugt aus einem durchgehenden Blechteil ausgebildet, das zwischen Befestigungsabschnitt und Abstandshalteabschnitt und bevorzugt auch zwischen Abstandshalteabschnitt und Einhängeabschnitt jeweils (insbesondere rechtwinklig) umgebogen ist.

An einer ersten Seite des Einhängeabschnitts sei eine Einhängelasche ausgebildet. Es kann dann an einer zweiten Seite des Einhängeabschnitts ein Steg ausgebildet sein, der geradlinig parallel zur Einhängelasche ausgebildet ist, somit geradlinig parallel zu einer Quergitterstrebe verläuft, auf die die Einhängelasche gehängt ist, und der bevorzugt unter eine zu dieser parallelen Quergitterstrebe greift. An dem Steg ist ein Einrastvorsprung ausgebildet, und zwar steht der Steg an einer Seite im Vergleich zur Einhängelasche etwas hervor. Dieses Hervorstehen lässt sich exakt so definieren, dass zum Rand der Einhängelasche virtuell eine Ebene definiert wird, in der der Rand liegt, wobei der Einrastvorsprung dann eben über diese Ebene hinaussteht. Durch das Umbiegen des Blechteils zwischen Befestigungsabschnitt und Abstandshalteabschnitt federt der Abstandshalteabschnitt mit dem Einhängeabschnitt, wenn der Befestigungsabschnitt an einer Hutschiene befestigt ist. Wird unter der Wirkung dieser Feder der genannte Rand der Einhängelasche gegen eine Längsgitterstrebe gedrückt, dann wird gleichzeitig der Einrastvorsprung hinter die Längsgitterstrebe gedrückt, wodurch der Hutschienenträger an dem Montagegitter festgedrückt bleibt.

Nachfolgend werden bevorzugte Ausführungsformen der Erfindung unter Bezug auf die Zeichnung beschrieben, in der:
- FIG 1: eine perspektivische Ansicht eines erfindungsgemäßen Hutschienenträgers ist,
- FIG 2: eine perspektivische Ansicht einer erfindungsgemäßen Hutschiene mit zwei erfindungsgemäßen Hutschienenträgern von schräg oben ist,
- FIG 3: eine perspektivische Ansicht einer erfindungsgemäßen Hutschiene mit zwei erfindungsgemäßen Hutschienenträgern von schräg unten ist,
- FIG 4: eine perspektivische Ansicht einer an einem Montagegitter befestigten erfindungsgemäßen Hutschiene schräg von der Vorderseite eines entsprechenden Verteilers her gesehen ist,
- FIG 5: eine perspektivische Ansicht einer erfindungsgemäßen Hutschiene, die an einem Montagegitter befestigt ist, schräg von der Rückseite des Montagegitters her gesehen ist, und
- FIG 6: einen Ausschnitt aus FIG 5 vergrößert zeigt.

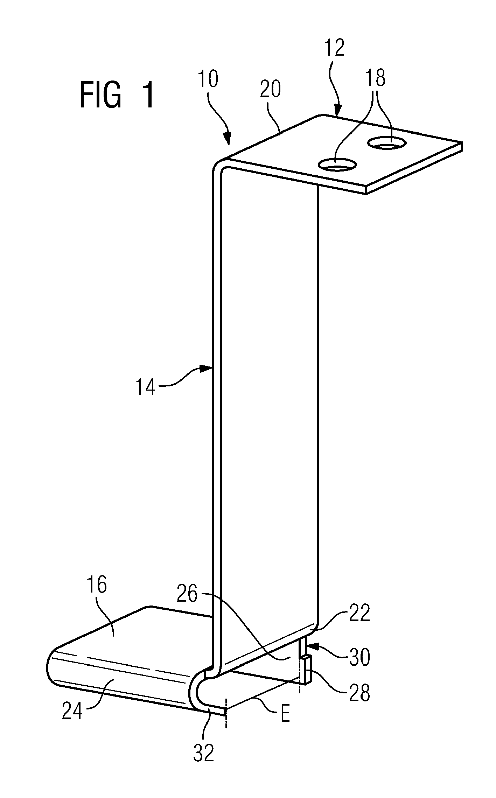

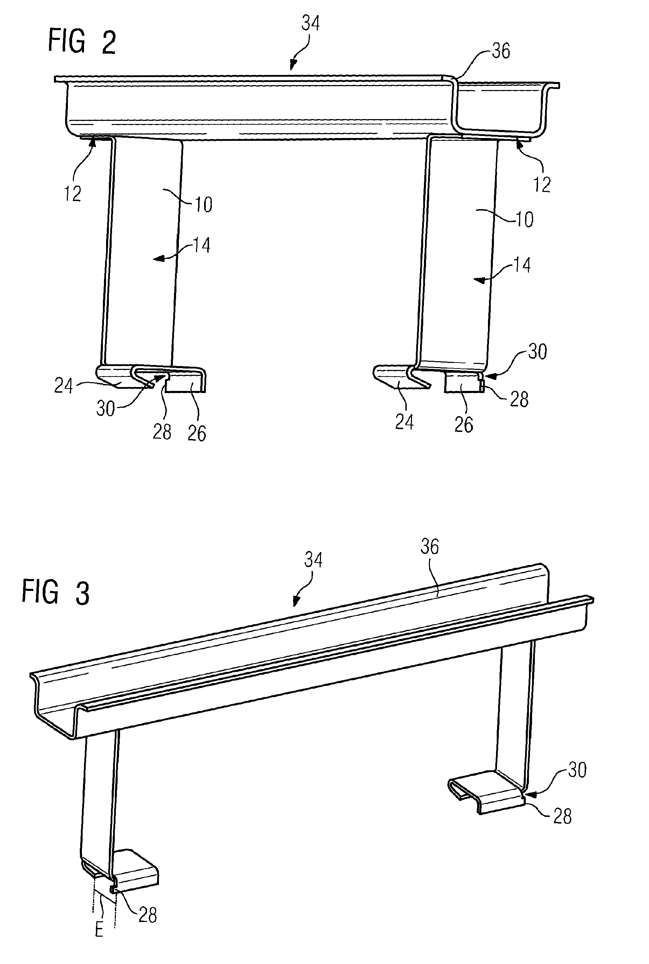

Ein erfindungsgemäßer Hutschienenträger ist in FIG 1 dargestellt und im Ganzen mit 10 bezeichnet. Er besteht aus einem gebogenen Blech. Er umfasst einen Befestigungsabschnitt 12, der zum Befestigen des Hutschienenträgers 10 an einer Hutschiene dient (vergleiche auch FIG 2 und 3), einen Abstandshalteabschnitt 14, und einen Einhängeabschnitt 16. In dem Befestigungsabschnitt 12 sind zwei Löcher 18 für Schrauben oder Nieten ausgebildet. Der Befestigungsabschnitt 12 ist grundsätzlich plattenförmig. Auch der Abstandshalteabschnitt 14 ist plattenförmig. Das Blech, das den Hutschienenträger 10 bildet, ist zwischen dem Befestigungsabschnitt 12 und dem Abstandshalteabschnitt 14 an einer Biegestelle 20 gebogen. Das Blech ist außerdem zwischen dem Abstandshalteabschnitt 14 und dem Einhängeabschnitt 16 an einer Biegestelle 22 ebenfalls rechtwinklig abgebogen, und zwar zur anderen Seite hin wie der Befestigungsabschnitt 12. Der Befestigungsabschnitt 12 und der Abstandshalteabschnitt 14 sind gewissermaßen aus einem Blechstreifen gebildet. Der Einhängeabschnitt 16 ist jedoch nicht aus einem Blechstreifen derselben Breite gebildet, sondern es wurde an dieser Stelle eine breitere Blechform ausgestanzt und umgebogen. An einer ersten Seite des Einhängeabschnitts 16 ist eine Einhängelasche 24 dadurch ausgebildet, dass das Blech um 150° - 180° umgebogen ist. An einer zweiten, entgegengesetzten Seite des Einhängeabschnitts 16 ist ein rechtwinklig abgebogener Steg 26 ausgebildet. An der Seite der Biegestelle 22 ist an dem Steg 26 ein Einrastvorsprung 28 ausgebildet. Zwischen Biegestelle 22 und Einrastvorsprung 28 ergibt sich eine Aussparung 30, in die eine Längsgitterstrebe eines Montagegitters eingreifen kann.

Um zu definieren, welcher Struktur gegenüber der Einrastvorsprung vorspringend bzw. hervorstehend ist, lässt sich eine Ebene E definieren, in der der Rand 32 der Einhängelasche liegt. Die Ebene E trifft auf den Steg 26 und trennt genau den Einrastvorsprung 28 vom restlichen Steg 26. Die Ebene E läuft bei rechtwinkliger Biegung des Blechstücks an der Biegestelle 22 parallel zur Ebene, die durch den Abstandshalteabschnitt 14 gebildet ist.

Die einzelnen Strukturen des erfindungsgemäßen Hutschienenträgers sind insbesondere in den FIG 2 und 3 gut zu erkennen, die jeweils eine im Ganzen mit 34 bezeichnete Hutschiene zeigen, die zwei erfindungsgemäße Hutschienenträger 10 aufweist. An dem jeweiligen Hutschienenstück 36 sind die Hutschienenträger 10 mit ihren Befestigungsabschnitten 12 jeweils festgeschraubt.

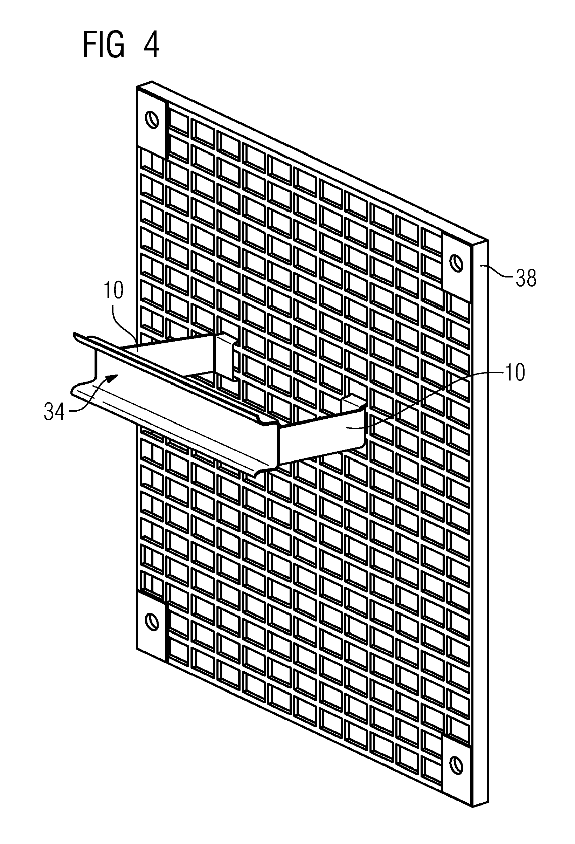

Die FIG 4 zeigt, wie eine solche Hutschiene 34 an einem Montagegitter 38 befestigt wird. Die FIG 4 stellt die Montagestrukturen dar, welche im Inneren eines elektrischen Verteilers verwendet werden können.

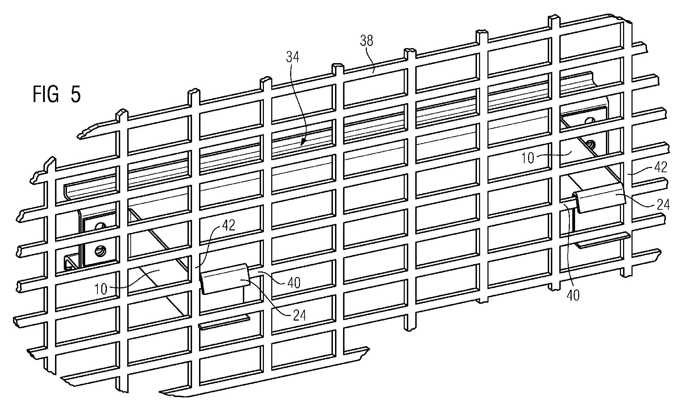

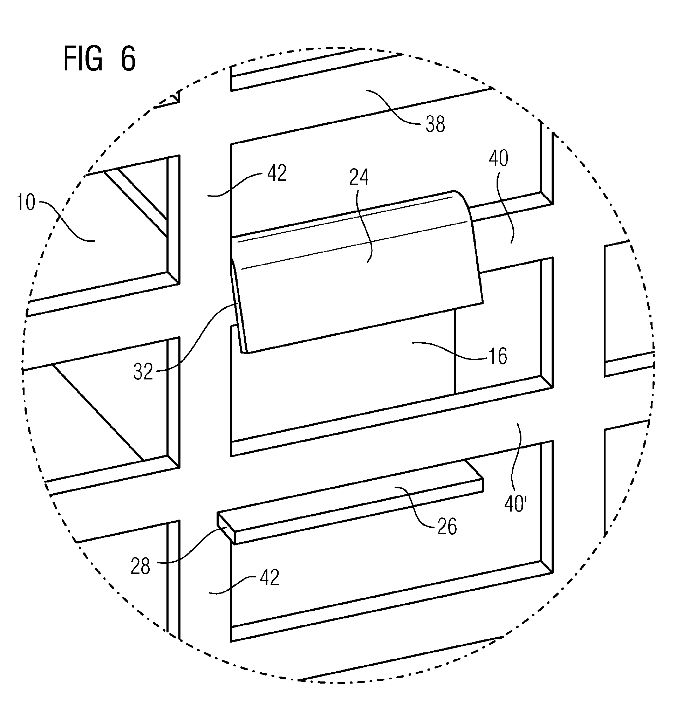

Zur Verdeutlichung der Montage der Hutschiene 34 mit den Hutschienenträgern 10 dient die FIG 5, die das Montagegitter 38 aus FIG 4 von der Rückseite her zeigt. Im montierten Zustand liegen jeweils die Einhängelaschen 24 genau auf einer Quergitterstrebe 40 des Montagegitters auf. In der FIG 5 wird deutlich, dass die Einhängelaschen 24 auf der Außenseite genau an einer Längsgitterstrebe 42 anliegen. Der Abstand zwischen den beiden Hutschienenträgern muss hierfür beim Befestigen an dem Hutschienenstück 36 geeignet gewählt sein. Die Befestigungssituation ist insbesondere in FIG 6 gut zu erkennen: Während die Einhängelasche 24 auf einer Quergitterstrebe 40 aufsitzt, steht der Steg 26 unter einer dazu parallelen zweiten Quergitterstrebe 40' hervor. Dadurch, dass der Rand 32 der Einhängelasche 24 genau an der Längsgitterstrebe 42 anliegt, steht der Einrastvorsprung 28 hinter der Längsgitterstrebe 42 hervor und hintergreift diese somit. Dadurch wird verhindert, dass die Hutschiene 34 durch einfaches Anheben von dem Montagegitter 38 gelöst werden kann.

Es ist nur möglich, dass der Einrastvorsprung 28 die Längsgitterstrebe 42 hintergreift, wenn bei der Montage des Hutschienenträgers 10 an dem Montagegitter 38 der gesamte Einhängeabschnitt 16 zur Seite, also in FIG 6 nach rechts, gebogen wird. Dies ist dadurch ermöglicht, dass die Biegestelle 20 die Wirkung einer Feder hat. Nach Loslassen wird dann der Einhängeabschnitt 16 nämlich automatisch nach außen gedrückt, der Rand 32 gegen die Längsgitterstrebe 42, und der Einrastvorsprung 28 unten hintergreift eben die Längsgitterstrebe. Zum Lösen der Hutschiene 34 muss somit der Einhängeabschnitt 16 wieder so weggebogen werden, dass der Einrastvorsprung 28 die Längsgitterstrebe 42 nicht mehr hintergreift. Da bei der Montage eine Aufsetzbewegung mit einem seitlichen Wegbiegen des Hutschienenträgers verbunden sein muss, muss zum Demontieren ebenfalls eine Aufwärtsbewegung mit einem seitlichen Wegbiegen des Hutschienenträgers 10 verbunden werden. Eine solche Situation kann nicht zufällig entstehen.

Der erfindungsgemäße Hutschienenträger ermöglicht es, dass eine Hutschiene, die aus einem Hutschienenstück 36 und zwei derartigen Hutschienenträgern 10 gebildet ist, auf sehr einfache Weise und schnell an ein Montagegitter montiert werden kann. Die Hutschiene 34 sitzt fest. Sie ist jedoch auch schnell wieder abnehmbar.

Wie oben erwähnt, sind die Abstände der Hutschienenträger 10 genau passend zum Gitterabstand des Montagegitters gewählt. Die Breite der Hutschiene 34 kann hierbei variabel gewählt sein. Es ist möglich, Hutschienen 34 verschiedener Breite für unterschiedliche Anwendungen auf Lager zu halten.

## Patentansprüche

1. Hutschiene (34), mit zwei Hutschienenträgern (10), die jeweils einen Einhängeabschnitt (16) aufweisen, der dazu ausgelegt ist, an einer Quergitterstrebe (40) eines Montagegitters (38) eingehängt zu werden.

2. Hutschiene (34) nach Anspruch 1, bei der jeder Einhängeabschnitt (16) eine Einhängelasche (24) aufweist.

3. Hutschiene (34) nach Anspruch 1 oder 2, bei der an jedem Einhängeabschnitt (16) ein Einrastvorsprung (28) ausgebildet ist, um bei auf einer Quergitterstrebe (40) des Montagegitters (38) eingehängtem Einhängeabschnitt (16) eine Längsgitterstrebe (42) des Montagegitters (38) zu hintergreifen.

4. Hutschiene (34) nach Anspruch 3, **dadurch gekennzeichnet, dass** jeder Hutschienenträger (10) einen Abstandshalteabschnitt (14) aufweist, der mit einem ersten Ende in einen an einem Hutschienenstück (36) befestigten Befestigungsabschnitt (12) übergeht, und an dessen zweitem Ende der Einhängeabschnitt (16) ausgebildet ist.

5. Hutschienenträger (10), mit einem Befestigungsabschnitt (12) zum Befestigen des Hutschienenträgers (10) an einem Hutschienenstück (36), einem Abstandshalteabschnitt (14) und einem Einhängeabschnitt (16), der zum Einhängen an einer Quergitterstrebe (40) eines Montagegitters ausgelegt ist.

6. Hutschienenträger (10) nach Anspruch 5, **dadurch gekennzeichnet, dass** er als ein durchgehendes Blechteil ausgebildet ist, das zwischen Befestigungsabschnitt (12) und Abstandshalteabschnitt (14) und zwischen Abstandhalteabschnitt (14) und Einhängeabschnitt (16) jeweils umgebogen ist.

7. Hutschienenträger (10) nach Anspruch 6, **dadurch gekennzeichnet, dass** an einer ersten Seite des Einhängeabschnitts (16) eine Einhängelasche (24) ausgebildet ist.

8. Hutschienenträger (10) nach Anspruch 7, **dadurch gekennzeichnet, dass** an einer zweiten Seite (16) des Einhängeabschnitts ein Steg (26) parallel zur Einhängelasche (24) ausgebildet ist, der einen Einrastvorsprung (28) aufweist.
